# EUROPEAN PATENT APPLICATION

(11) **EP 1 724 618 A1**
(43) Date of publication of application: **22.11.2006**
(21) Application number: 06000305.0
(22) Date of filing: 09.01.2006
(51) Int. Cl.: G02B 5/30, B23K 26/36, B23K 26/06

(54) **Display device with polarizer sheet and method for manufacturing polarizer sheet**

(30) Priority: 16.05.2005 KR 2005040544
(71) Applicant: LG Electronics Inc., Yongdungpo-Gu Seoul (KR)
(72) Inventor: Gon, Lee Sang, Chungju-si Choongchungbuk-do (KR); Ho, Choi Yun, Youngdungpo-gu Seoul (KR); Taek, Hong Bong, Heungduk-gu Chungju-si Choongchungbuk-do (KR); Hoon, Lee Jung, Heungduk-gu Chungju-si Choongchungbuk-do (KR); Yoon, Kim Kang, Heungduk-gu Chunju-si Choongchungbuk-do (KR); Sang, Lee Ung, Chungju-si Choongchungbuk-do (KR); Jong, Kim Chang, Chungju-si Choongchungbuk-do (KR); Ho, Lee Seoung, Sawoo-dong Kimpo-si Kyoungki-do (KR); Hwang, Kab Jin 1669, Wooncheon-dong, Choongcheongbook-do (KR); Gun, Kim Young, Heungduk-gu Chungju-si Choongchungbuk-do (KR); Chan, Bae Sung, Daejeon-si Choongcungnam-do (KR)
(74) Representative: von Hellfeld, Axel

(57) **Abstract**

A method for manufacturing a polarizer sheet includes: preparing a light transmission film where a metal thin film is formed, and forming metal patterns by irradiating a polarized pulse laser beam onto a plurality of regions of the metal thin film.

## Description

### BACKGROUND OF THE INVENTION

### Field of the Invention

The present invention relates to a method for manufacturing a polarizer sheet.

### Description of the Related Art

Recently, to replace heavy and bulky cathode ray tube (CRTs), various kinds of flat panel displays have been developed.

Examples of the flat panel displays are a liquid crystal display (LCD), a field emission display (FED), a plasma display panel (PDP), an electro-luminescence display (ELD), and so on. Many attempts have been made to provide an enhanced display quality and large screen of the flat panel displays.

Among the flat panel displays, the LCD is a non-luminous display device that displays an image using a light source such as a lamp.

The LCD has advantages of a small size, lightweight, and low power consumption. The LCD displays an image using electrical and optical properties of liquid crystals injected inside a liquid crystal panel.

Unlike the CRT, the liquid crystals injected between a thin film transistor (TFT) substrate and a color filter substrate are not a light emitting material that emits light by itself, but a light receiving material that emits light by controlling an amount of an external light. Therefore, the LCD requires a backlight unit that irradiates light onto the liquid crystal panel.

The backlight unit includes a mold frame with a receiving space, a reflection sheet disposed in a base of the receiving space to reflect the light toward the liquid crystal panel, a light guide plate disposed on the reflection sheet to guide the light, a lamp unit disposed between the light guide plate and a sidewall of the receiving space to emit the light, optical sheets stacked on the light guide plate to diffuse and condense the light, and a top chassis disposed on the mold frame to cover from an edge portion of the liquid crystal panel to a side of the mold frame.

In addition, top and bottom polarizers are respectively disposed in top and bottom of the liquid crystal panel to transmit a specific polarized light of an incident light. The light from the top polarizer and the light from the polarizer have a phase difference of 90° from each other.

The optical sheets include a diffusion sheet, a prism sheet, and a protection sheet. The diffusion sheet diffuses the light, and a prism sheet is disposed on the diffusion sheet to condense the diffused light and transmit it to the liquid crystal panel. The protection sheet protects the diffusion sheet and the prism sheet.

In such an LCD, when the light emitted from a lamp unit is incident on a liquid crystal panel, an intensity of the emitted light is attenuated while passing through the light guide plate and optical sheets. Therefore, a luminance of an image actually displayed on a screen is reduced to one millionth of a luminance of an initial light source.

That is, the related art backlight unit cannot meet a recent tendency that demands high-luminance display devices.

To meet the recent tendency, a thin multi-layer reflective polarizer film is used as a protection sheet that is disposed on the prism sheet.

The thin multi-layer reflective polarizer film transmits a specific polarized light among the light passing through the prism sheet, and reflects the other polarized light so that it is converted into a specific polarized light in the prism sheet. Then, the converted specific polarized light passes through the thin multi-layer reflective polarizer film, thus increasing an amount of light passing through a bottom polarizer.

At this point, the specific polarized light is a polarized light passing through the bottom polarizer and may be a longitudinal wave (P wave) or a transverse wave (S wave). In contrast to the specific polarized light, the other polarized wave may be a transverse wave (S wave) and a longitudinal wave (S wave).

In this manner, the related art backlight unit reuses the discarded polarized light to thereby enhance a whole luminance.

However, the related art thin multi-layer reflective polarizer film has drawbacks in that it has a low transmission efficiency of a specific polarization and a low reflection efficiency of the other polarizer.

### SUMMARY OF THE INVENTION

Accordingly, the present invention is directed to a method for manufacturing a polarizer sheet that substantially obviates one or more problems due to limitations and disadvantages of the related art.

An object of the present invention is to provide an LCD with an improved luminance.

Another object of the present invention is to provide a method for manufacturing a polarizer sheet, capable of improving the luminance of the liquid crystal display by transmitting a specific polarized light and reflecting the other light among the light passing through a prism sheet in a backlight unit of the LCD.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a method for manufacturing a polarizer sheet, including: preparing a light transmission film where a metal thin film is formed; and forming metal patterns by irradiating a polarized pulse laser beam onto a plurality of regions of the metal thin film.

In another aspect of the present invention, there is provided a display device including: a light source; a light guide plate for guiding light emitted from the light source; a diffusion sheet for diffusing the light guided by the light guide plate; a prism sheet for condensing the light diffused by the diffusion sheet; a polarizer sheet for allowing the condensed light to be transmitted according to a polarization component; and a liquid crystal display (LCD) panel for forming an image using the light passing through the polarizer sheet, wherein the polarizer sheet includes metal patterns formed by irradiating a polarized pulse laser beam onto a light transmission film with a metal thin film.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a sectional view of an LCD with a polarizer sheet according to an embodiment of the present invention;

FIGs. 2 to 4 are schematic diagrams illustrating a method for manufacturing a polarizer sheet according to an embodiment of the present invention; and

FIG. 5 is a diagram of a metal grid arrangement generated by the method for manufacturing the polarizer sheet according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

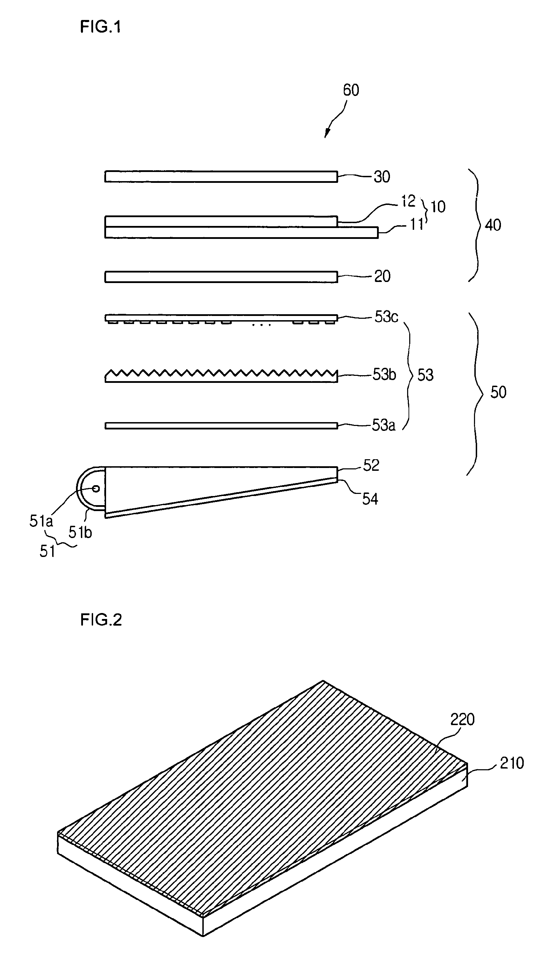

FIG. 1 is a sectional view of an LCD with a polarizer sheet according to an embodiment of the present invention.

The polarizer sheet of the present invention may be a linear grating polarizer film with metal grating formed at fine intervals.

Referring to FIG. 1, an LCD 60 according to an embodiment of the present invention includes a backlight unit 50 for emitting light, and a display unit 40 for displaying an image using the emitted light.

The backlight unit 50 is provided with a lamp unit 51 for emitting the light, and a light guide unit for guiding the light from the lamp unit 51 toward a liquid crystal panel 10.

The display unit 40 is provided with the liquid crystal panel 10, a top polarizer 30 disposed above the liquid crystal panel 10, and a bottom polarizer 20 disposed under the liquid crystal panel 10.

The liquid crystal panel 10 includes a TFT substrate 11 on which electrodes are formed, a color filter substrate 12, and a liquid crystal layer (not shown) interposed between the TFT substrate 11 and the color filter substrate 12.

Specifically, the lamp unit 51 includes a lamp 51a for emitting the light, and a lamp reflector 51b surrounding the lamp 51a. The light emitted from the lamp 51a is incident on a light guide plate 52, which will be described later. The lamp reflector 51b reflects the emitted light toward the light guide plate 52 to thereby increase an amount of light incident on the light guide plate 52.

The light guide unit includes the reflection plate 54, the light guide plate 52, and a plurality of optical sheets 53. The light guide plate 52 is disposed on one side of the lamp unit 51 and guides the light emitted from the lamp unit 51. At this point, the light guide plate 52 changes a path of the light emitted from the lamp unit 51 and guides it toward the liquid crystal panel 10.

Further, a reflection plate 54 is disposed under the light guide plate 52. Light leaking out from the light guide plate 52 is again reflected toward the light guide plate 52 by the reflection plate 54.

The optical sheets 53 are disposed above the light guide plate 52 to enhance the efficiency of the light emitted from the light guide plate 52. Specifically, the optical sheets 53 include a diffusion sheet 53a, a prism sheet 53b, and a polarizer sheet 53c, which are sequentially stacked on the light guide plate 52.

The diffusion sheet 53a scatters the light incident from the light guide plate 52 and thus makes a luminance distribution uniform. A plurality of triangular prisms are repeatedly formed on the prism sheet 53b.

Also, the polarizer sheet 53c disposed above the prism sheet 53b transmits a specific polarized light passing through the bottom polarizer 20 among the light passing through the prism sheet 53b, and reflects the other polarized light so that it is converted into a specific polarized light and then transmitted.

At this point, the specific polarized light is a polarized light passing through the bottom polarizer 20 and may be a longitudinal wave (P wave) or a transverse wave (S wave). In contrast to the specific polarized light, the other polarized wave may be a transverse wave (S wave) and a longitudinal wave (S wave).

In this embodiment, the polarizer sheet 53c disposed above the prism sheet 53b is a linear grating polarizer film with metal grating formed at fine intervals.

Specifically, a large-sized linear grating polarizer film with fine grating periods can be manufactured at a low cost using a metal deposition process and a laser irradiation process.

That is, in the manufacture of the polarizer sheet according to the embodiment of the present invention, a metal thin film layer is formed on a transparent sheet (substrate or film), and a polarized pulse laser beam is irradiated onto the metal thin film. In this manner, the metal gratings are formed at fine intervals.

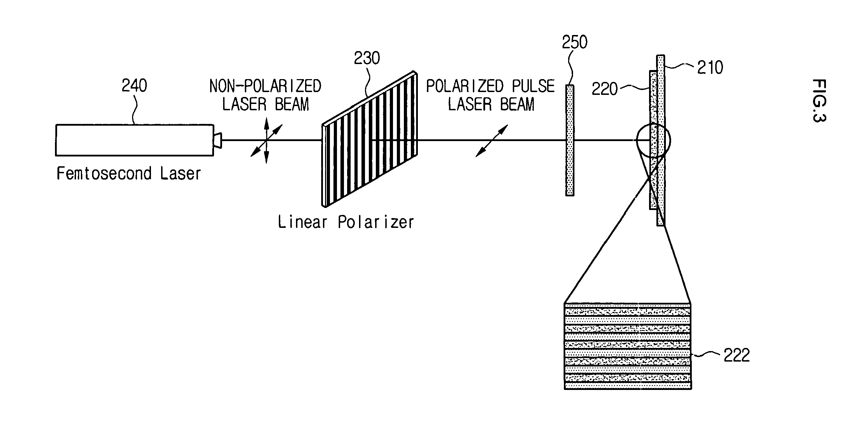

FIGs. 2 to 4 are schematic diagrams illustrating a method fro manufacturing the polarizer sheet according to an embodiment of the present invention.

Referring to FIG. 2, a metal thin film 220 is deposited on a transparent substrate 210.

Although the metal thin film 220 is preferably formed of materials having good electrical conductivity and reflectivity, such as gold or silver, the present invention is not limited to these materials. That is, inexpensive metal materials can also be used.

Also, regarding the substrate 210 where the metal thin film 220 is deposited, various kinds of substrates can be used according to the object.

For example, when the substrate will be used at more than a thermal deformation temperature of polymer material, a glass substrate can be used. In the other cases, a film made of transparent resin such as PET can be used.

Referring to FIG. 3, a linear polarizer 230 may be disposed at a position spaced apart from the substrate 210 where the metal thin film 220 is deposited. The linear polarizer 230 can increase the polarization component of a pulse laser beam.

The polarized pulse laser beam is irradiated onto a plurality of regions of the metal thin film 220.

That is, the linear grating polarizer is manufactured using the principle that the metal gratings 222 with fine patterns are formed on the surface of the metal thin film 220 by irradiating the linear polarized pulse laser beam onto the metal thin film 220.

In other words, the laser beam polarized in a specific direction by the linear polarizer ablates the metal thin film 220 deposited on the substrate. As the laser beam irradiates a plurality of regions of the metal thin film 220, the metal grating patterns 222 are formed perpendicular to the polarization axis of the linear polarizer.

That is, the metal grating patterns 222 can be formed in a desired direction by adjusting the polarization axis of the linear polarizer 230.

Also, the laser beam 240 can be appropriately selected according to the heat resistant temperature of the substrate 210 with the deposited metal thin film 220 and the pattern period of the desired metal gratings.

Accordingly, a desired pattern period of the metal gratings 222 formed in the linear polarizer film can be obtained by appropriately adjusting the wavelength, incident angle, and distance of the laser beam with a predetermined frequency band incident onto the metal thin film 220.

Also, the laser source 240 may include optical parts, such as a condensing lens, an f-θ lens, and a beam expender. In this case, a grating period of a finer pattern can be obtained by irradiating the laser beam in a state in which the linear polarizer is disposed.

Here, the optical parts use elements that allow the laser beam to be diffused uniformly.

At this time, the intensity of the laser beam needs to be adjusted considering the manufacturing speed of the linear grating. The reason for this is that when the laser beam is excessively condensed or has an excessive intensity, it is difficult to obtain a desired grating period. On the contrary, even when the laser pulse width is too wide, it is difficult to obtain a desired grating period due to the excessive heat transfer.

Consequently, it is preferable that the laser pulse width is shorter so as to reduce the excessive heat transfer of the laser beam.

Accordingly, the laser beam having a pulse width of less than several nanoseconds is required. In this embodiment, a laser source with the laser pulse width of femtosecond (10-¹⁵ seconds) is used.

In order to obtain a desired grating period and prevent an excessive heat transfer, a laser source with a pulse width of 1x10⁻¹⁵-1×10⁻¹³ second is used.

The reason why the femtosecond laser source is used is that a thermal damage to the polymer substrate can be reduced by transferring a dense energy within a short time.

Meanwhile, a wave conversion plate 250 can be used so as to change the wavelength of the laser beam.

The wave conversion substrate 250 has a thickness of 0.4-0.6 mm and can be formed of BaB₂O₄ or LiB₃O₄. In this embodiment, the wave conversion substrate 250 converts an incident light with a wavelength of 700-900 nm into a light with a wavelength of 350-450 nm.

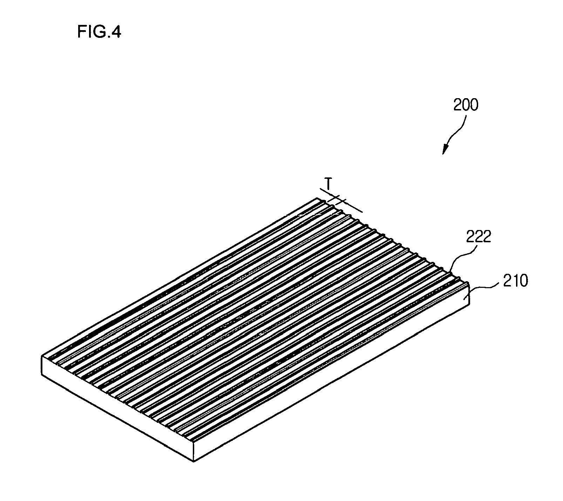

FIG. 4 is a perspective view the linear-grating polarizer film 200 formed by irradiating the pulse laser beam polarized by the linear polarizer onto the metal thin film.

Referring to FIG. 4, the metal gratings 222 formed at fine intervals are arranged perpendicular to the polarization direction of the polarized pulse laser beam irradiated onto the metal thin film.

The period (T) of the metal gratings 222 can be changed according to the wavelength and incident angle of the laser beam irradiated as described above. In this embodiment, the period of the metal gratings 222 is less than 200 nm.

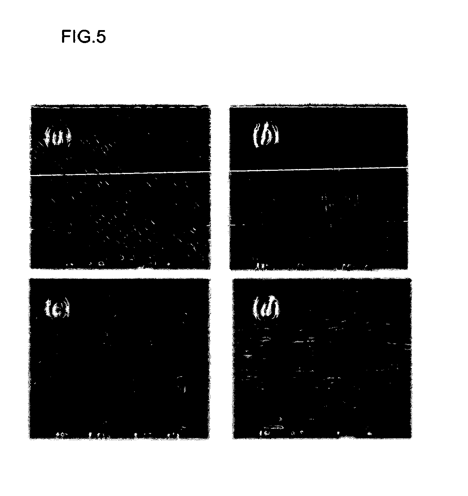

This can be observed in the photograph of the metal grating arrangement. It can be seen from Figs. 5(a) to 5(d) that the metal grating arrangement is differently formed.

In order to protect the metal gratings, it is preferable to attach a protective film (not shown) to the surface of the polarizer sheet 200, or to coat a transparent resin on its surface, and then to harden it.

In coating and hardening the transparent resin of a liquid state so as to protect the surface of the metal gratings, a thermal hardening or a light hardening can be used. Specifically, when considering the hardening speed, an ultraviolet (UV) hardening is preferable.

Further, in manufacturing the linear-grating polarizer, It is efficient to use a roll to roll method or an in line method.

It will be apparent to those skilled in the art that various modifications and variations can be made in the present invention. Thus, it is intended that the present invention covers the modifications and variations of this invention provided they come within the scope of the appended claims and their equivalent.

## Claims

1. A method for manufacturing a polarizer sheet, comprising:
preparing a light transmission film where a metal thin film is formed; and
forming metal patterns by irradiating a polarized pulse laser beam onto a plurality of regions of the metal thin film.

2. The method according to claim 1, wherein the pulse laser beam has a wavelength of 350-450 nm.

3. The method according to claim 1, wherein the pulse laser beam has a pulse width of 1×10⁻¹⁵-1×10⁻¹³ second.

4. The method according to claim 1, further comprising converting a wavelength of the pulse laser beam through a wave conversion substrate.

5. The method according to claim 4, wherein the wave conversion substrate is formed of BaB₂O₄.

6. The method according to claim 4, wherein the wave conversion substrate is formed of LiB₃O₄.

7. The method according to claim 4, wherein the wave conversion substrate has a thickness of 0.4-0.6 mm.

8. The method according to claim 1, wherein the pulse laser beam further transmits a linear polarizer.

9. The method according to claim 1, further comprising coating a protective film on the metal patterns.

10. A display device comprising:
a light source;
a light guide plate for guiding light emitted from the light source;
a diffusion sheet for diffusing the light guided by the light guide plate;
a prism sheet for condensing the light diffused by the diffusion sheet;
a polarizer sheet for allowing the condensed light to be transmitted according to a polarization component; and
a liquid crystal display (LCD) panel for forming an image using the light passing through the polarizer sheet,
wherein the polarizer sheet includes metal patterns formed by irradiating a polarized pulse laser beam onto a light transmission film with a metal thin film.

11. The display device according to claim 10, wherein the metal pattern are formed at intervals of less than 200 nm.
